(19) Europäisches Patentamt
European Patent Office
Office européen des brevets

(11) **EP 4 447 575 A1**

(12) **EUROPEAN PATENT APPLICATION**
published in accordance with Art. 153(4) EPC

(43) Date of publication:
**16.10.2024 Bulletin 2024/42**

(21) Application number: **21966838.1**

(22) Date of filing: **10.12.2021**

(51) International Patent Classification (IPC):
**H04W 68/00** (2009.01)

(86) International application number:
**PCT/CN2021/137209**

(87) International publication number:
**WO 2023/102920 (15.06.2023 Gazette 2023/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **FU, Ting
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **METHOD AND DEVICE FOR DETERMINING FIRST PAGING FRAME CORRESPONDING TO PAGING EARLY INDICATION (PEI), AND READABLE STORAGE MEDIUM**

(57) The present invention provides a method and device for determining a first paging frame corresponding to PEI, equipment, and a storage medium. The method is applicable to a wireless communication system, and comprises: determining, according to one or more paging occasions (PO) corresponding to paging early indication (PEI) and the number of POs in a paging frame, a first paging frame corresponding to the PEI. In the present invention, network equipment and/or user equipment can determine, on the basis of POs corresponding to PEI and the number of POs in a paging frame, the first paging frame corresponding to the PEI, thereby providing a basis for determining PEI location. In this way, the PEI location can be accurately determined, and the user equipment can accurately receive PEI DCI, thereby improving communication efficiency.

```
user equipment 102                          network device 101

S21-2, determining a first paging           S21-1, determining a first paging
frame corresponding to a PEI                 frame corresponding to a PEI
according to a PO(s)                         according to a PO(s)
corresponding to the PEI and a               corresponding to the PEI and a
number of POs in one paging                  number of POs in one paging
frame                                        frame
```

FIG. 2

**Description**

**FIELD**

The present invention relates to the field of wireless communication technology, and more particularly to a method and apparatus for determining a first paging frame corresponding to a paging early indication (PEI), and a readable storage medium.

**BACKGROUND**

In a wireless communication technology, for example, in a 5th generation mobile communication technology (5G), when a user equipment is in a radio resource control idle (RRC-IDLE) state or an RRC inactive (RRC-INACTIVE) state, it is necessary to periodically monitor a paging message. After monitoring the paging message, the UE may enter an RRC connected (RRC-CONNECTED) state to communicate normally with a network device. The paging message is carried on a physical downlink shared channel (PDSCH) and may be scheduled via downlink control information (DCI).
For the user equipment (UE), its corresponding paging occasion (PO) occurs periodically, and a radio frame where the paging occasion (PO) is located is called a paging frame (PF). In order to enable the UE to save power in the RRC idle state, a network device sends a paging early indication (PEI) to the UE. A usage of the PEI is as follows.
First, if the UE receives the PEI indication corresponding to the UE and the PEI indicates the UE to wake up, the UE needs to wake up before a next paging occasion to monitor the paging message.
Second, if the UE receives the PEI indication corresponding to the UE and the PEI does not indicate the UE to wake up, the UE does not need to wake up in a next paging cycle, that is, the UE does not need to monitor a next paging occasion.
Third, if the UE does not receive the PEI indication corresponding to the UE, the UE does not need to wake up in a next paging cycle, that is, the UE does not need to monitor a next paging occasion.
One PEI may correspond to one or more POs (a number of POs corresponding to the one PEI (*POnumPerPEI*) may be determined by a high-level configuration parameter). These POs may be located on one paging frame (PF) or span a plurality of PFs (e.g., a maximum of 2 PFs).
How to locate the first paging frame (or called the first one PF) corresponding to the PEI is a technical problem that needs to be solved.

**SUMMARY**

In view of this, the present invention provides a method, apparatus and device for determining a first paging frame corresponding to a PEI, and a readable storage medium.
In a first aspect, a method for determining a first paging frame corresponding to a PEI is provided, which is performed by a user equipment or a network device, and includes: determining the first paging frame corresponding to the PEI according to one or more paging occasions (POs) corresponding to the paging early indication (PEI) and a number of POs in one paging frame. In an embodiment of the present invention, since the paging early indication (PEI) may correspond to one or more paging occasions (POs); and the PEI may correspond to one or more paging frames; the network device and/or the user equipment may determine the first paging frame corresponding to the PEI according to the one or more POs corresponding to the PEI and the number of POs in the one paging frame, providing a premise for determining a position of the PEI, so that the position of the PEI may be accurately determined, thus allowing the UE to accurately receive PEI DCI and improving a communication efficiency.
In a possible implementation manner, determining the first paging frame corresponding to the PEI according to one or more paging occasions (POs) corresponding to the paging early indication (PEI) and the number of POs in the one paging frame includes: determining the first paging frame corresponding to the PEI according to the number of one or more paging occasions (POs) corresponding to the paging early indication (PEI) and the number of POs in the one paging frame.
In a possible implementation manner, determining the first paging frame corresponding to the PEI according to the number of one or more paging occasions (POs) corresponding to the paging early indication (PEI) and the number of POs in the one paging frame includes: in response to the number of POs corresponding to the PEI being not greater than the number of POs in the one paging frame, determining a paging frame where a paging occasion (PO) monitored by the user equipment is located to be the first paging frame corresponding to the PEI.
In a possible implementation manner, determining the first paging frame corresponding to the PEI according to the number of one or more paging occasions (POs) corresponding to the paging early indication (PEI) and the number of POs in the one paging frame includes: in response to the number of POs corresponding to the PEI being greater than the number of POs in the one paging frame, calculating a second value according to the following formula, and determining the first paging frame corresponding to the PEI according to the second value:

$$\text{the second value} = \left\lfloor {i_{PO}}\middle/{N_S} \right\rfloor \times {T}\middle/{N} ;$$

where $\lfloor \rfloor$ represents rounding down, $i_{PO}$ represents a relative PO index of a PO monitored by the user equipment with respect to one or more POs corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, determining the first paging frame corresponding to the PEI according to one or more paging occasions (POs) corresponding to the paging early indication (PEI) and the number of POs in the one paging frame includes: in response to $i_{PO}$ being less than the number of POs in the one paging frame, determining the first paging frame corresponding to the PEI to be: a paging frame where a paging occasion monitored by the user equipment is located; where $i_{PO}$ represents a relative PO index of the PO monitored by the user equipment with respect to one or more POs corresponding to the PEI, and $N_S$ represents the number of paging occasions in the one paging frame.

In a possible implementation manner, determining the first paging frame corresponding to the PEI according to one or more paging occasions (POs) corresponding to the paging early indication (PEI) and the number of POs in the paging frame includes: in response to $i_{PO}$ being not less than the number of POs in the one paging frame, calculating, by the network device, a second value according to the following formula, and determining the first paging frame corresponding to the PEI according to the second value:

$$\text{the second value} = \left\lfloor {i_{PO}}\middle/{N_S} \right\rfloor \times {T}\middle/{N} ;$$

where $\lfloor \rfloor$ represents rounding down, $i_{PO}$ represents a relative PO index of a PO monitored by the user equipment with respect to one or more POs corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, determining the first paging frame corresponding to the PEI according to one or more paging occasions (POs) corresponding to the paging early indication (PEI) and the number of POs in the paging frame includes: determining a difference between a system frame number of a paging frame where a paging occasion monitored by the user equipment is located and a second value to be a system frame number of the first paging frame corresponding to the PEI. The second value is $\left\lfloor {i_{PO}}\middle/{N_S} \right\rfloor \times {T}\middle/{N}$ ; where $\lfloor \rfloor$ represents rounding down, $i_{PO}$ represents a relative PO index of a paging occasion (PO) monitored by the user equipment with respect to one or more paging occasions (POs) corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, determining the first paging frame corresponding to the PEI according to the second value includes: determining a system frame number of the first paging frame corresponding to the PEI to be: a difference between a system frame number of a paging frame where a paging occasion monitored by the user equipment is located and the second value.

In a possible implementation manner, $i_{PO}$ is determined by following formulas:

$$i_{PO} = ((UE\_ID \bmod \mathrm{N}) \times \mathrm{N}_s + i\_s) \bmod POnumPerPEI$$

$$i\_s = floor(UE\_ID / N) \bmod N_s$$

where *UE_ID* represents a user identifier, POnumPerPEI represents the number of paging occasions (POs) corresponding to the PEI, *floor* represents rounding down, and mod represents a modulo operation.

In a second aspect, a communication apparatus is provided. The communication apparatus may be configured to perform steps performed by the UE in the above first aspect or any one of possible designs of the first aspect. The UE may implement each function in the above methods through a form of a hardware structure, a software module, or a hardware structure plus a software module.

When the communication apparatus shown in the second aspect is implemented through the software module, the communication apparatus may include a processing module.

When performing the steps described in the first aspect, the processing module is configured to determine a first paging frame corresponding to a PEI according to one or more paging occasions (POs) corresponding to the paging early indication (PEI) and a number of POs in one paging frame.

In a possible implementation manner, the processing module is further configured to determine the first paging frame corresponding to the PEI according to a number of one or more paging occasions (POs) corresponding to the paging early indication (PEI) and the number of POs in the one paging frame.

In a possible implementation manner, the processing module is further configured to, in response to the number of POs corresponding to the PEI being not greater than the number ($N_S$) of POs included in the one paging frame, determine a paging frame where a paging occasion (PO) monitored by the user equipment is located to be the first paging frame corresponding to the PEI.

In a possible implementation manner, the processing module is further configured to, in response to the number of POs corresponding to the PEI being greater than the number ($N_S$) of POs included in the one paging frame, calculate a second value according to the following formula, and determine the first paging frame corresponding to the PEI according to the second value:

$$\text{the second value} = \left\lfloor \frac{i_{PO}}{N_s} \right\rfloor \times \frac{T}{N};$$

where $\lfloor \rfloor$ represents rounding down, $i_{PO}$ represents a relative PO index of a PO monitored by the user equipment with respect to one or more POs corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, the processing module is further configured to, in response to $i_{PO}$ being less than $N_S$, determine the first paging frame corresponding to the PEI to be: a paging frame where a paging occasion monitored by the user equipment is located; where $i_{PO}$ represents a relative PO index of the PO monitored by the user equipment with respect to one or more POs corresponding to the PEI, and $N_S$ represents the number of paging occasions in the one paging frame.

In a possible implementation manner, the processing module is further configured to, in response to $i_{PO}$ being not less than $N_S$, calculate, by the network device, a second value according to the following formula, and determine the first paging frame corresponding to the PEI according to the second value:

$$\text{the second value} = \left\lfloor \frac{i_{PO}}{N_s} \right\rfloor \times \frac{T}{N};$$

where $\lfloor \rfloor$ represents rounding down, $i_{PO}$ represents a relative PO index of a PO monitored by the user equipment with respect to one or more POs corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, the processing module is further configured to determine a difference between a system frame number of a paging frame where a paging occasion monitored by the user equipment is located and a second value to be a system frame number of the first paging frame corresponding to the PEI. The second value is

$$\left\lfloor \frac{i_{PO}}{N_s} \right\rfloor \times \frac{T}{N}$$

, where $\lfloor \rfloor$ represents rounding down, $i_{PO}$ represents a relative PO index of a paging occasion (PO) monitored by the user equipment with respect to one or more paging occasions (POs) corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, determining the first paging frame corresponding to the PEI according to the second value includes: determining a system frame number of the first paging frame corresponding to the PEI to be: a difference between a system frame number of a paging frame where a paging occasion monitored by the user equipment is located and the second value.

In a possible implementation manner, $i_{PO}$ is determined by following formulas:

$$i_{PO} = ((UE\_ID \bmod N) \times N_s + i\_s) \bmod POnumPerPEI$$

$$i\_s = floor(UE\_ID / N) \bmod N_s$$

where *UE_ID* represents a user identifier, POnumPerPEI represents the number of paging occasions (POs) corresponding to the PEI, *floor* represents rounding down, and mod represents a modulo operation.

In a third aspect, a communication apparatus is provided. The communication apparatus may be configured to perform steps performed by the network device in the above first aspect or any one of possible designs of the first aspect. The network device may implement each function in the above methods through a form of a hardware structure, a software module, or a hardware structure plus a software module.

When the communication apparatus shown in the third aspect is implemented through the software module, the communication apparatus may include a processing module.

When performing the steps described in the first aspect, the processing module is configured to determine a first paging frame corresponding to a PEI according to one or more paging occasions (POs) corresponding to the paging early indication (PEI) and a number of POs in one paging frame.

In a possible implementation manner, the processing module is further configured to determine the first paging frame corresponding to the PEI according to a number of one or more paging occasions (POs) corresponding to the paging early indication (PEI) and the number of POs in the one paging frame.

In a possible implementation manner, the processing module is further configured to, in response to the number of POs corresponding to the PEI being not greater than the number ($N_S$) of POs included in the one paging frame, determine a paging frame where a paging occasion (PO) monitored by the user equipment is located to be the first paging frame corresponding to the PEI.

In a possible implementation manner, the processing module is further configured to, in response to the number of POs corresponding to the PEI being greater than the number ($N_S$) of POs included in the one paging frame, calculate a second value according to the following formula, and determine the first paging frame corresponding to the PEI according to the second value:

$$\text{the second value} = \left\lfloor {i_{PO}}/{N_S} \right\rfloor \times {T}/{N};$$

where $\lfloor \rfloor$ represents rounding down, $i_{PO}$ represents a relative PO index of a PO monitored by the user equipment with respect to one or more POs corresponding to the PEI, $N_S$ represents the number of paging occasions in the one paging frame, *T* represents a paging cycle of the user equipment, and *N* represents a number of paging frames in one paging cycle of the user equipment.

In a possible implementation manner, the processing module is further configured to, in response to $i_{PO}$ being less than $N_S$, determine the first paging frame corresponding to the PEI to be: a paging frame where a paging occasion monitored by the user equipment is located; where $i_{PO}$ represents a relative PO index of the PO monitored by the user equipment with respect to one or more POs corresponding to the PEI, and $N_S$ represents the number of paging occasions in the one paging frame.

In a possible implementation manner, the processing module is further configured to, in response to $i_{PO}$ being not less than $N_S$, calculate, by the network device, a second value according to the following formula, and determine the first paging frame corresponding to the PEI according to the second value:

$$\text{the second value} = \left\lfloor {i_{PO}}/{N_S} \right\rfloor \times {T}/{N};$$

where $\lfloor \rfloor$ represents rounding down, $i_{PO}$ represents a relative PO index of a PO monitored by the user equipment with respect to one or more POs corresponding to the PEI, $N_S$ represents the number of paging occasions in the one paging frame, *T* represents a paging cycle of the user equipment, and *N* represents a number of paging frames in one paging cycle of the user equipment.

In a possible implementation manner, the processing module is further configured to determine a difference between a system frame number of a paging frame where a paging occasion monitored by the user equipment is located and a second value to be a system frame number of the first paging frame corresponding to the PEI. The second value is

$\left\lfloor {i_{PO}}/{N_S} \right\rfloor \times {T}/{N}$, where $\lfloor \rfloor$ represents rounding down, $i_{PO}$ represents a relative PO index of a paging occasion (PO) monitored by the user equipment with respect to one or more paging occasions (POs) corresponding to the PEI, $N_S$ represents the number of paging occasions in the one paging frame, *T* represents a paging cycle of the user equipment, and *N* represents a number of paging frames in one paging cycle of the user equipment.

In a possible implementation manner, determining the first paging frame corresponding to the PEI according to the second value includes: determining a system frame number of the first paging frame corresponding to the PEI to be: a difference between a system frame number of a paging frame where a paging occasion monitored by the user equipment is located and the second value.

In a possible implementation manner, $i_{PO}$ is determined by following formulas:

$$i_{PO} = ((UE\_ID \bmod N) \times N_s + i\_s) \bmod POnumPerPEI$$

$$i\_s = floor(UE\_ID / N) \bmod N_s$$

where *UE_ID* represents a user identifier, POnumPerPEI represents the number of paging occasions (POs) corresponding to the PEI, *floor* represents rounding down, and mod represents a modulo operation.

In a fourth aspect, a communication device is provided, which includes a processor and a memory configured to store computer programs. The processor is configured to execute the computer programs to implement the first aspect or any one of possible designs of the first aspects.

In a fifth aspect, a computer-readable storage medium is provided, which has stored therein instructions (or computer programs, or programs) that, when invoked by a computer, cause the computer to execute the above first aspect or any one of possible designs of the first aspect.

It is to be understood that both the foregoing general description and the following detailed description are illustrative and explanatory only and shall not be construed to limit the present invention.

## BRIEF DESCRIPTION OF THE DRAWINGS

The accompanying drawings described here are used to provide a further understanding of embodiments of the present invention and constitute a part of the present invention. Illustrative examples of embodiments of the present invention and their descriptions are used to explain the embodiments of the present invention and shall not be construed to limit the embodiments of the present invention.

The accompanying drawings, which are incorporated in and constitute a part of this specification, illustrate embodiments consistent with the present invention and, together with the description, serve to explain the principles of the embodiments of the present invention.

FIG. 1 is a schematic diagram of an architecture of a wireless communication system provided by an embodiment of the present invention;

FIG. 2 is a flow chart of a method for determining a first paging frame corresponding to a PEI according to an illustrative embodiment;

FIG. 3 is a flow chart of a method for determining a first paging frame corresponding to a PEI according to another illustrative embodiment;

FIG. 4 is a flow chart of a method for determining a first paging frame corresponding to a PEI according to a further illustrative embodiment;

FIG. 5 is a schematic diagram showing a paging cycle according to an illustrative embodiment;

FIG. 6 is a flow chart of a method for determining a first paging frame corresponding to a PEI according to a further illustrative embodiment;

FIG. 7 is a flow chart of a method for determining a first paging frame corresponding to a PEI according to a further illustrative embodiment;

FIG. 8 is a flow chart of a method for determining a first paging frame corresponding to a PEI according to a further illustrative embodiment;

FIG. 9 is a flow chart of a method for determining a first paging frame corresponding to a PEI according to a further illustrative embodiment;

FIG. 10 is a block diagram of an apparatus for determining a first paging frame corresponding to a PEI according to an illustrative embodiment;

FIG. 11 is a block diagram of a device for determining a first paging frame corresponding to a PEI according to an illustrative embodiment; and

FIG. 12 is a block diagram of a device for determining a first paging frame corresponding to a PEI according to another illustrative embodiment.

## DETAILED DESCRIPTION

Embodiments of the present invention will now be further described in connection with the accompanying drawings and specific implementations.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of apparatuses and methods consistent with some aspects related to the present invention as recited in the appended claims.

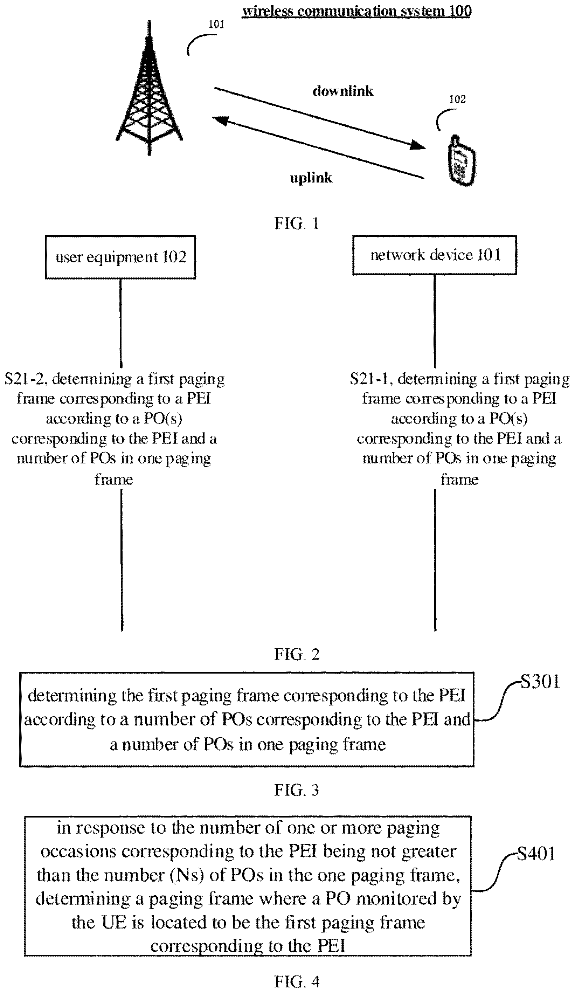

As shown in FIG. 1, a method for determining a first paging frame corresponding to a paging early indication (PEI) provided by an embodiment of the present invention may be performed by a wireless communication system 100, which may include, but is not limited to, a network device 101 and a UE 102. The UE 102 is configured to support a carrier aggregation, and the UE 102 may be connected to a plurality of carrier units of the network device 101. The plurality of carrier units includes one primary carrier unit and one or more secondary carrier units.

It should be understood that the above wireless communication system 100 may be applied to both low-frequency scenarios and high-frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future fifth-generation (5th-generation, 5G) system, a new radio (NR) communication system or a future evolved public land mobile network (PLMN) system.

The UE 102 shown above may be a UE, a terminal, an access terminal, a terminal unit, a terminal station, a mobile station (MS), a remote station, a remote terminal, a mobile terminal, a wireless communication device, a terminal agent or a UE. The UE 102 may be equipped with a wireless transceiving function, which may perform a communication (such as a wireless communication) with one or more network devices 101 of one or more communication systems, and accepts network services provided by the network devices 101. The network devices 101 herein include, but are not limited to, an illustrated base station.

The UE 102 may be a cellular phone, a cordless phone, a session initiation protocol (SIP) phone, a wireless local loop (WLL) station, a personal digital assistant (PDA) device, a handheld device with wireless communication functions, a computing device or other processing devices connected to wireless modems, a vehicle-mounted device, a wearable device, a UE in a future 5G network or a UE in a future evolved public land mobile communication network (PLMN).

The network device 101 may be an access network device (or an access network station). The access network device refers to a device that provides network access functions, such as a radio access network (RAN) base station and so on. The network device may specifically include a base station (BS) device, or includes a base station device and a wireless resource management device for controlling the base station device. The network device may also include a relay station (a relay device), an access point, and a base station in the future 5G network, a base station in the future evolved PLMN, or an NR base station. The network device may be the wearable device or the vehicle-mounted device. The network device may also be a communication chip with a communication module.

For example, the network device 101 includes, but is not limited to, a next-generation base station (gnodeB, gNB) in 5G, an evolved node B (eNB) in an LTE system, a radio network controller (RNC), a node B (NB) in a wideband code division multiple access (WCDMA) system, a wireless controller under a CRAN system, a base station controller (BSC), a base transceiver station (BTS) in a global system for mobile communication (GSM) system or code division multiple access (CDMA) system, a home base station (for example, a home evolved nodeB, or a home node B (HNB)), a baseband unit (BBU), a transmitting and receiving point (TRP), a transmitting point (TP) or a mobile switching center.

A PEI occasion (PEI-O) has an offset of several radio frames in a time domain position with respect to a first paging frame in one or more PFs corresponding to the PEI. For example, if a system frame number (SFN) of the first paging frame (also called the first one PF) in one or more paging frames corresponding to the PEI is SFN n, an SFN where the PEI-O is located is SFN n-K, that is, the PEI-O has an offset of K radio frames.

Embodiments of the present invention provide a method for determining a first paging frame corresponding to a paging early indication (PEI). FIG. 2 is a flow chart of a method for determining a first paging frame corresponding to a PEI according to an illustrative embodiment. As shown in FIG. 2, the method includes the following steps.

In step S21-1, a network device determines the first paging frame corresponding to the PEI according to one or more paging occasions (POs) corresponding to the PEI and a number of POs in one paging frame.

In step S21-2, a UE determines the first paging frame corresponding to the PEI according to one or more POs corresponding to the PEI and a number of POs in one paging frame.

It should be noted that a serial number for each of the above steps is only for convenience of explanation and is not intended to limit an order of execution; the above steps may be executed in any order, and embodiments of the present invention do not impose any limitations on this.

In a possible implementation manner, the number of POs in the one paging frame refers to a number of POs included in the one paging frame. For example, if one paging frame includes X PO(s), the number of POs in the one paging frame is X.

In a possible implementation manner, the step S21-1 further includes: determining, by the network device, a position of the PEI according to a determined first paging frame corresponding to the PEI. For example, the position of the PEI is determined according to a determined position of the first paging frame corresponding to the PEI and the offset of the K radio frames.

In a possible implementation manner, the step S21-2 further includes: determining, by the UE, a position of the PEI according to a determined first paging frame corresponding to the PEI. For example, the position of the PEI is determined according to a determined position of the first paging frame corresponding to the PEI and the offset of the K radio frames.

In a possible implementation manner, determining the first paging frame may refer to determining a system frame number (SFN) of the first paging frame.

In a possible implementation manner, the terminal device or the network device may determine the first paging frame corresponding to the PEI according to a number of POs corresponding to the PEI and the number of POs in the one paging frame.

In embodiments of the present invention, the network device and the UE each determine the first paging frame corresponding to the PEI according to the PO(s) corresponding to the PEI and the number of POs in the one paging frame, providing a premise for determining the position of the PEI, so that the position of the PEI may be accurately determined, thus allowing the UE to accurately receive PEI DCI and improving the communication efficiency.

Embodiments of the present invention provide a method for determining a first paging frame corresponding to a PEI, which is performed by a UE 102 or a network device 101. FIG. 3 is a flow chart of a method for determining a first paging frame corresponding to a PEI according to an illustrative embodiment. As shown in FIG. 3, the method includes the following step.

In step S301, the first paging frame corresponding to the paging early indication (PEI) is determined according to one or more paging occasions (POs) corresponding to the paging early indication (PEI) and a number of POs in one paging frame (PF).

In a possible implementation manner, determining the first paging frame refers to determining an SFN of the first paging frame.

In a possible implementation manner, the number of POs in the one paging frame refers to a number of POs included in the one paging frame. For example, if one paging frame includes X PO(s), the number of POs in the one paging frame is X.

In a possible implementation manner, the terminal device and the network device may determine the first paging frame corresponding to the PEI according to the number of POs corresponding to the PEI and the number of POs in the one paging frame.

In embodiments of the present invention, since the paging early indication (PEI) may correspond to one or more paging occasions (POs); and the PEI may correspond to one or more paging frames; the network device and/or the UE may determine the first paging frame corresponding to the PEI according to the PO(s) corresponding to the PEI and the number of POs in the one paging frame, providing a premise for determining a position of the PEI, so that the position of the PEI may be accurately determined, thus allowing the UE to accurately receive PEI DCI and improving the communication efficiency.

Embodiments of the present invention provide a method for determining a first paging frame corresponding to a PEI, which is performed by a UE 102 or a network device 101.

FIG. 4 is a flow chart of a method for determining a first paging frame corresponding to a PEI according to an illustrative embodiment. As shown in FIG. 4, the method includes the following step.

In step S401, in response to the number of POs corresponding to the PEI being not greater than the number ($N_S$) of POs in the one paging frame, a paging frame where a paging occasion (PO) monitored by the UE is located is determined to be the first paging frame corresponding to the PEI.

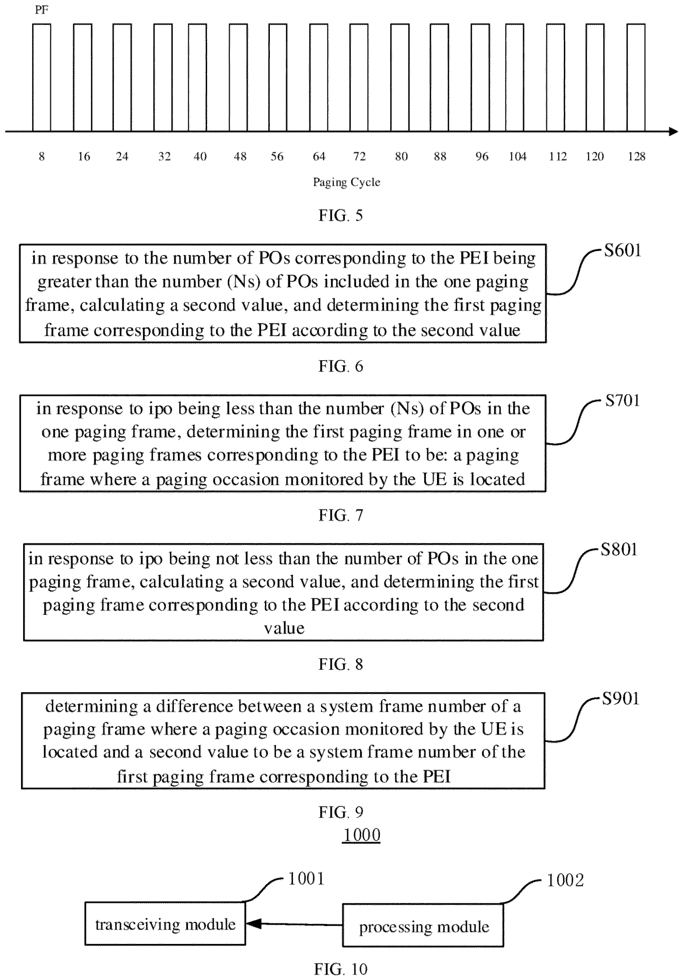

In a possible embodiment, for example, in FIG. 5, SFN is cycled from 0 to 1024. T = 128, that is, a value of a paging cycle of a UE is 128, or it may be understood that a paging cycle of a UE is 128 system radio frames. One paging cycle illustratively includes 16 paging frames (PFs). One PF may include $N_S$ POs, where $N_S$ = 2, that is, the number of paging occasions in the one paging frame is 2, or it may be understood that the one paging frame includes 2 paging occasions. POnumPerPEI = 2, that is, the number of POs corresponding to the PEI (POnumPerPEI) is 2. After the UE receives the PEI indication, if the PEI instructs the UE to wake up, the UE needs to monitor the POs corresponding to the PEI and the UE itself. Since POnumPerPEI $\leq N_S$ holds true, the UE may determine the first paging frame corresponding to the PEI to be the paging frame where the PO monitored by the UE is located. That is:

In the related art, different paging frames in the one paging cycle correspond to different UEs.

In a possible implementation manner, determining the first paging frame by the network device refers to that the network device determines an SFN of the first paging frame.

In embodiments of the present invention, when the number of one or more paging occasions (POs) corresponding to the paging early indication (PEI) is not greater than $N_S$, the network device or the UE determines a system frame number (SFN) of the first paging frame in one or more paging frames corresponding to the PEI to be the paging frame where the paging occasion monitored by the UE is located, so as to accurately determine the position of the PEI, thus allowing the UE to accurately receive PEI DCI and improving the communication efficiency.

Embodiments of the present invention provide a method for determining a first paging frame corresponding to a PEI, which is performed by a UE 102 or a network device 101.

FIG. 6 is a flow chart of a method for determining a first paging frame corresponding to a PEI according to an illustrative embodiment. As shown in FIG. 6, the method includes the following step.

In step S601, in response to the number of POs corresponding to the PEI being greater than the number ($N_S$) of POs in the one paging frame, a second value is calculated according to the following formula, and the first paging frame corresponding to the PEI is determined according to the second value:

$$\text{the second value} = \left\lfloor i_{PO} \middle/ N_S \right\rfloor \times T \middle/ N \,;$$

where $\lfloor \rfloor$ represents rounding down, $i_{PO}$ represents a relative PO index of a PO monitored by the user equipment with respect to the one or more POs corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, determining the first paging frame refers to determining an SFN of the first paging frame. That is, the step S601 may be that: in response to the number of POs corresponding to the PEI being greater than the number ($N_S$) of POs included in the one paging frame, a difference between a system frame number of a paging frame where a paging occasion monitored by the UE is located and the second value is an SFN of the first paging frame corresponding to the PEI. The second value is $\left\lfloor i_{PO} \middle/ N_S \right\rfloor \times T \middle/ N$.

It should be noted that, in a case where the number of POs corresponding to the PEI is not greater than the number ($N_S$) of POs included in the one paging frame, the SFN of the first paging frame corresponding to the PEI may also be calculated according to the following formula: an SFN of a first paging frame corresponding to a PEI = an SFN of a paging frame corresponding to a PO monitored by a $\text{UE} - \left\lfloor i_{PO} \middle/ N_S \right\rfloor \times T \middle/ N$.

That is, the step S401 may be that: in response to the number of POs corresponding to the PEI being not greater than the number ($N_S$) of POs in the one paging frame, a difference between a system frame number (SFN) of a paging frame where a paging occasion monitored by the UE is located and the second value is an SFN of the first paging frame corresponding to the PEI. The second value is $\left\lfloor i_{PO} \middle/ N_S \right\rfloor \times T \middle/ N$.

For example, in FIG. 5, in a possible embodiment, the SFN is cycled by 1024. T = 128, a value of a paging cycle of the UE is 128, that is, the paging cycle of the UE is 128 system radio frames. According to a formula of determining the SFN of the PF, the UE determines the SFNs where the PF corresponding to the UE itself is located to be 8, 136, 264, 392, 520, 648, 776, and 904. (The SFN is cycled by 1024.)

The network device configures one paging cycle including 16 paging frames. $N_S$ =2, that is, the number of POs in the one paging frame is 2, or it may be understood that the one paging frame includes 2 paging occasions. POnumPerPEI = 4, that is, a number of POs corresponding to PEI (POnumPerPEI) is 4. Since POnumPerPEI = 4, it may be determined that a condition POnumPerPEI > $N_S$ holds true, and the UE calculates the relative PO index ($i_{PO}$) (starting from 0) of the PO monitored by the UE in the one or more POs corresponding to the PEI monitored by the UE according to formula (1):

$$i_{PO} = ((UE\_ID \bmod N) \times N_S + i\_s) \bmod POnumPerPEI \quad (1)$$

$$i\_s = floor(UE\_ID / N) \bmod N_S \quad (2)$$

where $UE\_ID$ represents a user identifier, which may be obtained by 5G_S_TMSI mod 1024, *floor* represents rounding down, and mod represents a modulo operation.

A value range of $i_{PO}$ is from 0 to POnumPerPEI-1. In this example, the value range of $i_{PO}$ is from 0 to 3.

After receiving the PEI indication, if the PEI instruct the UE to wake up, the UE needs to monitor a PO corresponding to the PEI and the UE itself, that is, a $(i_{PO}+1)^{th}$ PO corresponding to the PEI.

Assuming that the relative index of the PO $i_{PO}$ = 0, and an SFN of a PF corresponding to the PO is 8, the UE may determine the SFN of the first paging frame corresponding to the PEI to be:

$$8-\left\lfloor \frac{0}{2} \right\rfloor \times \frac{128}{16} = 8.$$

Assuming that a relative index of the PO is $i_{PO}$ = 1, and an SFN of a PF corresponding to the PO is 8, the UE may determine the SFN of the first paging frame corresponding to the PEI to be:

$$8-\left\lfloor \frac{1}{2} \right\rfloor \times \frac{128}{16} = 8.$$

Assuming that a relative index of the PO is $i_{PO}$ = 2, and an SFN of a PF corresponding to the PO is 136, the UE may determine the SFN of the first paging frame corresponding to the PEI to be:

$$136-\left\lfloor \frac{2}{2} \right\rfloor \times \frac{128}{16} = 128.$$

Assuming that a relative index of the PO is $i_{PO}$ = 3, and an SFN of a PF corresponding to the PO is 136, the UE may determine the SFN of the first paging frame corresponding to the PEI to be:

$$136-\left\lfloor \frac{3}{2} \right\rfloor \times \frac{128}{16} = 128.$$

In embodiments of the present invention, when the number of POs corresponding to PEI is greater than $N_S$, the network device or the UE calculates the SFN of the first paging frame in the paging frames corresponding to the PEI according to the relative PO index of the paging occasion (PO) monitored by the UE in one or more paging occasions corresponding to the PEI, so as to accurately determine the position of the PEI, thus allowing the UE to accurately receive PEI DCI and improving the communication efficiency.

Embodiments of the present invention provide a method for determining a position of a PEI, which is performed by a UE 102 or a network device 101. FIG. 7 is a flow chart of a method for determining a first paging frame corresponding to a PEI according to an illustrative embodiment. As shown in FIG. 7, the method includes the following step.

In step S701, in response to $i_{PO}$ being less than the number of POs in the one paging frame, the first paging frame in the one or more paging frames corresponding to the PEI is determined to be: a paging frame where a paging occasion monitored by the UE is located.

$N_S$ represents the number of paging occasions in the one paging frame.

In a possible implementation manner, determining the first paging frame by the network device refers to determining an SFN of the first paging frame.

In a possible implementation manner, determining the first paging frame by the network device refers to that the network device determines the SFN of the first paging frame.

In embodiments of the present invention, when $i_{PO}$ is less than $N_S$, the network device or the UE determines the system frame number (SFN) of the first paging frame in the one or more paging frames corresponding to the PEI to be the paging frame where the paging occasion monitored by the UE is located, so as to accurately determine the position of the PEI, thus allowing the UE to accurately receive PEI DCI and improving the communication efficiency.

Embodiments of the present invention provide a method for determining a first paging frame corresponding to a PEI, which is performed by a UE 102 or a network device 101. FIG. 8 is a flow chart of a method for determining a first paging frame corresponding to a PEI according to an illustrative embodiment. As shown in FIG. 8, the method includes the following step.

In step S801, in response to $i_{PO}$ being not less than the number of POs in the one paging frame, a second value is calculated according to the following formula, and the first paging frame corresponding to the PEI is determined according to the second value:

$$\text{the second value} = \left\lfloor \frac{i_{PO}}{N_S} \right\rfloor \times \frac{T}{N};$$

where $\lfloor \rfloor$ represents rounding down, $i_{PO}$ represents a relative PO index in a PO monitored by the user equipment with respect to POs corresponding to the PEI, $N_S$ represents the number of paging occasions in the one paging frame, $T$

represents a paging cycle of the user equipment, and $N$ represents a number of paging frames in one paging cycle of the user equipment.

In a possible implementation manner, determining the first paging frame refers to determining an SFN of the first paging frame. That is, the step S801 may be that: in response to $i_{PO}$ being not less than $N_S$, a difference between a system frame number of a paging frame where a paging occasion monitored by the UE is located and the second value is an SFN of the first paging frame corresponding to the PEI. The second value is $\left\lfloor i_{PO}/N_S \right\rfloor \times T/N$ .

It should be noted that, in a case where $i_{PO}$ is less than $N_S$, the SFN of the first paging frame corresponding to the PEI may also be calculated according to the following formula: an SFN of a first paging frame corresponding to a PEI = an SFN of a paging frame corresponding to a PO monitored by a UE - $\left\lfloor i_{PO}/N_S \right\rfloor \times T/N$ .

That is, the step S601 may be that: in response to $i_{PO}$ being less than the $N_S$, a difference between a system frame number (SFN) of a paging frame where a paging occasion monitored by the UE is located and the second value is an SFN of the first paging frame corresponding to the PEI.

In a possible implementation manner, the UE calculates the relative PO index ($i_{PO}$) (starting from 0) of the PO monitored by the UE in the one or more POs corresponding to the PEI monitored by the UE according to formula (1):

$$i_{PO} = ((UE\_ID \bmod N) \times N_S + i\_s) \bmod POnumPerPEI \quad (1)$$

$$i\_s = floor(UE\_ID / N) \bmod N_S \quad (2)$$

where $UE\_ID$ represents a user identifier, which may be obtained by 5G_S_TMSI mod 1024, *floor* represents rounding down, and mod represents a modulo operation.

A value range of $i_{PO}$ is from 0 to POnumPerPEI-1.

In a possible implementation manner, determining a paging frame where the PO is located refers to determining an SFN of the paging frame where the PO is located.

In embodiments of the present invention, the network device or the UE calculates the system frame number (SFN) of the first paging frame in the one or more paging frames corresponding to the PEI according to the relative PO index of the PO monitored by the UE in POs corresponding to the PEI, so as to accurately determine the position of the PEI, thus allowing the UE to accurately receive PEI DCI and improving the communication efficiency.

Embodiments of the present invention provide a method for determining a first paging frame corresponding to a PEI, which is performed by a UE 102 or a network device 101.

FIG. 9 is a flow chart of a method for determining a first paging frame corresponding to a PEI according to an illustrative embodiment. As shown in FIG. 9, the method includes the following step.

In step S901, a difference between a system frame number of a paging frame where a paging occasion monitored by the UE is located and a second value is determined to be a system frame number of the first paging frame corresponding to the PEI.

The second value is $\left\lfloor i_{PO}/N_S \right\rfloor \times T/N$ , where ⌊ ⌋ represents rounding down, $i_{PO}$ represents a relative PO index of a paging occasion (PO) monitored by the user equipment with respect to one or more paging occasions corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, the UE calculates the relative PO index ($i_{PO}$) (starting from 0) of the PO monitored by the UE in the one or more POs corresponding to the PEI monitored by the UE according to formula (1):

$$i_{PO} = ((UE\_ID \bmod N) \times N_S + i\_s) \bmod POnumPerPEI \quad (1)$$

$$i\_s = floor(UE\_ID / N) \bmod N_S \quad (2)$$

where $UE\_ID$ represents a user identifier, which may be obtained by 5G_S_TMSI mod 1024, *floor* represents rounding down, and mod represents a modulo operation.

A value range of $i_{PO}$ is from 0 to POnumPerPEI-1.

In a possible example, when the number of one or more paging occasions corresponding to PEI is not greater than $N_S$, the value range of $i_{PO}$ is from 0 to POnumPerPEI-1, so that a value of $\left\lfloor i_{PO} / N_S \right\rfloor$ is 0, and thus the second value is 0, and the system frame number (SFN) of the first paging frame in the one or more paging frames corresponding to the PEI is determined to be: a paging frame where the paging occasion monitored by the UE is located.

In a possible implementation manner, determining the first paging frame by the network device refers to determining an SFN of the first paging frame.

In embodiments of the present invention, the network device or the UE calculates the system frame number (SFN) of the first paging frame in the one or more paging frames corresponding to the PEI according to the system frame number of the paging frame where the paging occasion monitored by the UE is located, so as to accurately determine the position of the PEI, thus allowing the UE to accurately receive PEI DCI and improving the communication efficiency.

In the above embodiments, it is not necessary to determine a relationship between the number of POs corresponding to the PEI and the number of POs included in the one paging frame; the above-mentioned solution for calculating the second value is always used to determine the first paging frame. It is understood that, in a scenario where the number of POs corresponding to the PEI is not greater than the number of POs included in the one paging frame, a calculation result obtained is the same as a result obtained in the step S901.

Based on the same concept as the above method embodiments, embodiments of the present invention further provide a communication apparatus, which may have the functions of the UE 102 in the above method embodiments, and may be used to perform the steps provided by the above method embodiments to be performed by the UE 102. The functions may be implemented by hardware, or may be implemented by software or hardware executing corresponding software. The hardware or software includes one or more modules corresponding to the above functions.

In a possible implementation manner, a communication apparatus 1000 shown in FIG. 10 may serve as the UE 102 involved in the above method embodiments, and perform the steps performed by the UE 102 in the above method embodiments.

The communication apparatus 1000 includes: a processing module 1002 configured to determine the first paging frame corresponding to the paging early indication (PEI) according to one or more paging occasions (POs) corresponding to the paging early indication (PEI) and a number of POs in one paging frame.

In a possible implementation manner, determining the first paging frame refers to determining an SFN of the first paging frame.

In a possible implementation manner, a communication apparatus 1000 shown in FIG. 10 may serve as the UE 102 involved in the above method embodiments, and perform the steps performed by the UE 102 in the above method embodiments. The communication apparatus 1000 includes: the processing module 1002 configured to determine the first paging frame corresponding to the paging early indication (PEI) according to the number of one or more paging occasions (POs) corresponding to the PEI and the number of POs in the one paging frame.

In a possible implementation manner, determining the first paging frame refers to determining an SFN of the first paging frame.

In a possible implementation manner, a communication apparatus 1000 shown in FIG. 10 may serve as the UE 102 involved in the above method embodiments, and perform the steps performed by the UE 102 in the above method embodiments. The communication apparatus 1000 includes: the processing module 1002 configured to determine a paging frame where a paging occasion (PO) monitored by the UE is located to be the first paging frame corresponding to a PEI in response to the number of POs corresponding to the PEI being not greater than a number ($N_S$) of POs included in the one paging frame.

In a possible implementation manner, determining the first paging frame refers to determining an SFN of the first paging frame.

In a possible implementation manner, a communication apparatus 1000 shown in FIG. 10 may serve as the UE 102 involved in the above method embodiments, and perform the steps performed by the UE 102 in the above method embodiments. The communication apparatus 1000 includes: the processing module 1002, in response to the number of POs corresponding to the PEI being greater than the number ($N_S$) of POs included in the one paging frame, calculating a second value according to the following formula, and determining a paging frame where a PO monitored by the UE is located according to the second value;

$$\text{the second value} = \left\lfloor i_{PO} / N_S \right\rfloor \times T/N \ ;$$

where $\llcorner \lrcorner$ represents rounding down, $i_{PO}$ represents a relative PO index of a PO monitored by the user equipment with respect to the POs corresponding to the PEI, $N_S$ represents the number of paging occasions in the one paging frame, $T$

represents a paging cycle of the user equipment, and $N$ represents a number of paging frames in one paging cycle of the user equipment.

In a possible implementation manner, the processing module 1002 is further configured to, in response to the number of POs corresponding to the PEI being greater than the number ($N_S$) of POs included in the one paging frame, calculate a second value according to the following formula, and determine a system frame number (SFN) of the first paging frame in one or more paging frames corresponding to the PEI to be: a difference between a system frame number of a paging frame where a paging occasion monitored by the UE is located and a second value. The second value is

$$\left\lfloor i_{PO}/N_S \right\rfloor \times T/N$$

, where $\lfloor \rfloor$ represents rounding down, $i_{PO}$ represents a relative PO index of a paging occasion (PO) monitored by the UE with respect to one or more paging occasions corresponding to the PEI, $N_S$ represents the number of paging occasions in the one paging frame, $T$ represents a paging cycle of the UE, and $N$ represents a number of paging frames in one paging cycle of the UE.

In a possible implementation manner, the processing module 1002 is configured to, in response to $i_{PO}$ being less than $N_S$, determine a system frame number (SFN) of the first paging frame in a plurality of paging frames corresponding to the PEI to be: an SFN of a paging frame where a paging occasion monitored by the UE is located.

$N_S$ represents the number of paging occasions in the one paging frame.

In a possible implementation manner, determining the first paging frame refers to determining the SFN of the first paging frame.

In a possible implementation manner, a communication apparatus 1000 shown in FIG. 10 may serve as the UE 102 involved in the above method embodiments, and perform the steps performed by the UE 102 in the above method embodiments. The communication apparatus 1000 includes: the processing module 1002 configured to, in response to $i_{PO}$ being less than $N_S$, determine the first paging frame in a plurality of paging frames corresponding to the PEI to be: the paging frame where the paging occasion monitored by the UE is located.

$N_S$ represents the number of paging occasions in the one paging frame.

In a possible implementation manner, a communication apparatus 1000 shown in FIG. 10 may serve as the UE 102 involved in the above method embodiments, and perform the steps performed by the UE 102 in the above method embodiments. The communication apparatus 1000 includes: the processing module 1002 configured to, in response to $i_{PO}$ being not less than $N_S$, calculate, by the network device, a second value according to the following formula, and determine the first paging frame corresponding to the PEI according to the second value:

$$\text{the second value} = \left\lfloor i_{PO}/N_S \right\rfloor \times T/N ;$$

where $\lfloor \rfloor$ represents rounding down, $i_{PO}$ represents a relative PO index in a PO monitored by the user equipment with respect to POs corresponding to the PEI, $N_S$ represents the number of paging occasions in the one paging frame, $T$ represents a paging cycle of the user equipment, and N represents a number of paging frames in one paging cycle of the user equipment.

In a possible implementation manner, the processing module 1002 is further configured to, in response to $i_{PO}$ being not less than $N_S$, determine a system frame number (SFN) of the first paging frame in the one or more paging frames corresponding to the PEI to be: a difference between a system frame number of a paging frame where a paging occasion monitored by the UE is located and the second value. The second value is $\left\lfloor i_{PO}/N_S \right\rfloor \times T/N$, where $\lfloor \rfloor$ represents rounding down, $i_{PO}$ represents a relative PO index in the paging occasion (PO) monitored by the user equipment with respect to one or more paging occasions corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, the UE calculates the relative PO index ($i_{PO}$) (starting from 0) of the PO monitored by the UE in the one or more POs corresponding to the PEI monitored by the UE according to formula (1):

$$i_{PO} = ((UE\_ID \bmod N) \times N_S + i\_s) \bmod POnumPerPEI \quad (1)$$

$$i\_s = floor(UE\_ID / N) \bmod N_S \quad (2)$$

where *UE_ID* represents a user identifier, which may be obtained by 5G_S_TMSI mod 1024, *floor* represents rounding down, and mod represents a modulo operation.

A value range of $i_{PO}$ is from 0 to POnumPerPEI-1.

In a possible implementation manner, determining a paging frame where the PO is located refers to determining an SFN of the paging frame where the PO is located.

In a possible implementation manner, a communication apparatus 1000 shown in FIG. 10 may serve as the UE 102 involved in the above method embodiments, and perform the steps performed by the UE 102 in the above method embodiments. The communication apparatus 1000 includes: the processing module 1002 configured to determine the first paging frame corresponding to the PEI according to a difference between a system frame number of a paging frame where a paging occasion monitored by the UE is located and the second value.

The second value is $\left\lfloor i_{PO}/N_S \right\rfloor \times T/N$, where ⌊ ⌋ represents rounding down, $i_{PO}$ represents a relative PO index in the paging occasion (PO) monitored by the user equipment with respect to one or more paging occasions corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, a system frame number (SFN) of the first paging frame in the one or more paging frames corresponding to the PEI is determined to be: the difference between the system frame number of the paging frame where the paging occasion monitored by the UE is located and the second value.

The UE calculates the relative PO index ($i_{PO}$) (starting from 0) of the PO monitored by the UE in the one or more POs corresponding to the PEI monitored by the UE according to formula (1):

$$i_{PO} = ((UE\_ID \bmod N) \times N_S + i\_s) \bmod POnumPerPEI \quad (1)$$

$$i\_s = floor(UE\_ID / N) \bmod N_S \quad (2)$$

where $UE\_ID$ represents a user identifier, which may be obtained by 5G_S_TMSI mod 1024, *floor* represents rounding down, and mod represents a modulo operation.

A value range of $i_{PO}$ is from 0 to POnumPerPEI-1.

Based on the same concept as the above method embodiments, embodiments of the present invention further provide a communication apparatus, which may have the functions of the network device 101 in the above method embodiments, and may be used to perform the steps provided by the above method embodiments to be performed by the network device 101. The functions may be implemented by hardware, or may be implemented by software or hardware executing corresponding software. The hardware or software includes one or more modules corresponding to the above functions.

In a possible implementation manner, a communication apparatus 1000 shown in FIG. 10 may serve as the network device 101 involved in the above method embodiments, and perform the steps performed by the network device 101 in the above method embodiments.

The communication apparatus 1000 includes: a processing module 1002 configured to determine the first paging frame corresponding to the paging early indication (PEI) according to one or more paging occasions (POs) corresponding to the paging early indication (PEI) and a number of POs in one paging frame.

In a possible implementation manner, determining the first paging frame refers to determining an SFN of the first paging frame.

In a possible implementation manner, a communication apparatus 1000 shown in FIG. 10 may serve as the network device 101 involved in the above method embodiments, and perform the steps performed by the network device 101 in the above method embodiments. The communication apparatus 1000 includes: the processing module 1002 configured to determine the first paging frame corresponding to the paging early indication (PEI) according to a number of one or more paging occasions (POs) corresponding to the PEI and the number of POs in the one paging frame.

In a possible implementation manner, determining the first paging frame refers to determining an SFN of the first paging frame.

In a possible implementation manner, a communication apparatus 1000 shown in FIG. 10 may serve as the network device 101 involved in the above method embodiments, and perform the steps performed by the network device 101 in the above method embodiments. The communication apparatus 1000 includes: the processing module 1002 configured to determine a paging frame where a paging occasion (PO) monitored by the UE is located to be the first paging frame corresponding to a PEI in response to the number of POs corresponding to the PEI being not greater than a number ($N_S$) of POs included in the one paging frame.

In a possible implementation manner, determining the first paging frame refers to determining an SFN of the first paging frame.

In a possible implementation manner, a communication apparatus 1000 shown in FIG. 10 may serve as the network device 101 involved in the above method embodiments, and perform the steps performed by the network device 101 in the above method embodiments. The communication apparatus 1000 includes: the processing module 1002 configured to, in response to the number of POs corresponding to the PEI being greater than the number ($N_S$) of POs included in the one paging frame, calculate a second value according to the following formula, and determining a first paging frame corresponding to the PEI according to the second value;

$$\text{the second value} = \left\lfloor {i_{PO}}\Big/{N_S} \right\rfloor \times {T}\Big/{N} \; ;$$

where $\lfloor \;\rfloor$ represents rounding down, $i_{PO}$ represents a relative PO index of a PO monitored by the user equipment with respect to the POs corresponding to the PEI, $N_S$ represents the number of paging occasions in the one paging frame, $T$ represents a paging cycle of the user equipment, and N represents a number of paging frames in one paging cycle of the user equipment.

In a possible implementation manner, the processing module 1002 is further configured to, in response to the number of POs corresponding to the PEI being greater than the number ($N_S$) of POs included in the one paging frame, calculate the second value according to the following formula, and determine the system frame number (SFN) of the first paging frame in the one or more paging frames corresponding to the PEI to be: a difference between a system frame number of a paging frame where a paging occasion monitored by the UE is located and a second value. The second value is $\left\lfloor {i_{PO}}\Big/{N_S} \right\rfloor \times {T}\Big/{N}$ , where $\lfloor \;\rfloor$ represents rounding down, $i_{PO}$ represents a relative PO index of a paging occasion (PO) monitored by the UE with respect to one or more paging occasions corresponding to the PEI, $N_S$ represents the number of paging occasions in the one paging frame, $T$ represents a paging cycle of the UE, and $N$ represents a number of paging frames in one paging cycle of the UE.

In a possible implementation manner, the processing module 1002 is configured to, in response to $i_{PO}$ being less than $N_S$, determine a system frame number (SFN) of the first paging frame in a plurality of paging frames corresponding to the PEI to be: an SFN of a paging frame where a paging occasion monitored by the UE is located.

$N_S$ represents the number of paging occasions in the one paging frame.

In a possible implementation manner, determining the first paging frame refers to determining the SFN of the first paging frame.

In a possible implementation manner, a communication apparatus 1000 shown in FIG. 10 may serve as the network device 101 involved in the above method embodiments, and perform the steps performed by the network device 101 in the above method embodiments. The communication apparatus 1000 includes: the processing module 1002 configured to, in response to $i_{PO}$ being less than $N_S$, determine the first paging frame in the plurality of paging frames corresponding to the PEI to be: the paging frame where the paging occasion monitored by the UE is located.

$N_S$ represents the number of paging occasions in the one paging frame.

In a possible implementation manner, a communication apparatus 1000 shown in FIG. 10 may serve as the network device 101 involved in the above method embodiments, and perform the steps performed by the network device 101 in the above method embodiments. The communication apparatus 1000 includes: the processing module 1002 configured to, in response to $i_{PO}$ being not less than $N_S$, calculate, by the network device, a second value according to the following formula, and determine the first paging frame corresponding to the PEI according to the second value:

$$\text{the second value} = \left\lfloor {i_{PO}}\Big/{N_S} \right\rfloor \times {T}\Big/{N} \; ;$$

where $\lfloor \;\rfloor$ represents rounding down, $i_{PO}$ represents a relative PO index in a PO monitored by the user equipment with respect to POs corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, the processing module 1002 is further configured to, in response to $i_{PO}$ being not less than $N_S$, determine a system frame number (SFN) of the first paging frame in one or more paging frames corresponding to the PEI to be: a difference between a system frame number of a paging frame where a paging occasion monitored by the UE is located and the second value. The second value is $\left\lfloor i_{PO} / N_S \right\rfloor \times T / N$, where $\lfloor \rfloor$ represents rounding down, $i_{PO}$ represents a relative PO index in the paging occasion (PO) monitored by the user equipment with respect to one or more paging occasions corresponding to the PEI, $N_S$ represents the number of paging occasions in the one paging frame, $T$ represents a paging cycle of the user equipment, and $N$ represents a number of paging frames in one paging cycle of the user equipment.

In a possible implementation manner, the UE calculates the relative PO index ($i_{PO}$) (starting from 0) of the PO monitored by the UE in the one or more POs corresponding to the PEI monitored by the UE according to formula (1):

$$ i_{PO} = ((UE\_ID \bmod N) \times N_S + i\_s) \bmod POnumPerPEI \quad (1) $$

$$ i\_s = floor(UE\_ID / N) \bmod N_S \quad (2) $$

where $UE\_ID$ represents a user identifier, which may be obtained by 5G_S_TMSI mod 1024, *floor* represents rounding down, and mod represents a modulo operation.

A value range of $i_{PO}$ is from 0 to POnumPerPEI-1.

In a possible implementation manner, determining a paging frame where the PO is located refers to determining an SFN of the paging frame where the PO is located.

In a possible implementation manner, a communication apparatus 1000 shown in FIG. 10 may serve as the network device 101 involved in the above method embodiments, and perform the steps performed by the network device 101 in the above method embodiments. The communication apparatus 1000 includes: the processing module 1002 configured to determine the first paging frame corresponding to the PEI according to a difference between a system frame number of a paging frame where a paging occasion monitored by the UE is located and the second value.

The second value is $\left\lfloor i_{PO} / N_S \right\rfloor \times T / N$, where $\lfloor \rfloor$ represents rounding down, $i_{PO}$ represents a relative PO index in the paging occasion (PO) monitored by the user equipment with respect to one or more paging occasions corresponding to the PEI, $N_S$ represents the number of paging occasions in the one paging frame, $T$ represents a paging cycle of the user equipment, and $N$ represents a number of paging frames in one paging cycle of the user equipment.

The UE calculates the relative PO index ($i_{PO}$) (starting from 0) of the PO monitored by the UE in the one or more POs corresponding to the PEI monitored by the UE according to formula (1):

$$ i_{PO} = ((UE\_ID \bmod N) \times N_S + i\_s) \bmod POnumPerPEI \quad (1) $$

$$ i\_s = floor(UE\_ID / N) \bmod N_S \quad (2) $$

where $UE\_ID$ represents a user identifier, which may be obtained by 5G_S_TMSI mod 1024, *floor* represents rounding down, and mod represents a modulo operation.

A value range of $i_{PO}$ is from 0 to POnumPerPEI-1.

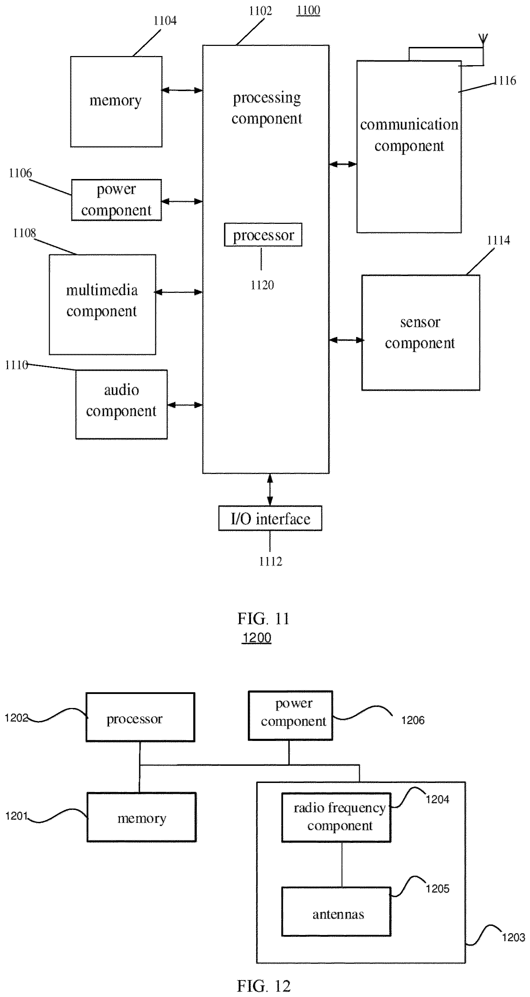

When a communication device is the UE 102, its structure may also be as shown in FIG. 11. The device 1100 may be a mobile phone, a computer, a digital broadcast terminal, a messaging device, a game console, a tablet device, a medical device, a fitness device, a personal digital assistant, or the like. For example, the device 1100 may be a mobile phone, a computer, a digital broadcast terminal, a messaging device, a game console, a tablet device, a medical device, a fitness device, a personal digital assistant, or the like.

Referring to FIG. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, phone calls, data communications, camera operations, and recording operations. The processing component 1102 can include one or more processors 1120 to execute instructions to perform all or some of the steps in the above-described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, videos, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and/or the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the device 1100 is in an operation mode, such as a call mode, a recording mode, and a voice recognition mode. The received audio signal may be further stored in the memory 1104 or sent via the communication component 1116. In some embodiments, the audio component 1110 further includes a speaker to output audio signals.

The I/O interface 1112 provides an interface between the processing component 1102 and peripheral interface modules, such as keyboards, click wheels, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100. The sensor component 1114 may also detect a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may further include a light sensor, such as a CMOS or CCD image sensor, for use in imaging applications. In some embodiments, the sensor component 1114 may further include an accelerometer sensor, a gyroscope sensor, a magnetic sensor, a pressure sensor, or a temperature sensor.

The communication component 1116 is configured to facilitate communication, wired or wireless, between the device 1100 and other devices. The device 1100 can access a wireless network based on a communication standard, such as WiFi, 4G or 5G or a combination thereof. In an illustrative embodiment, the communication component 1116 receives a broadcast signal or broadcast associated information from an external broadcast management system via a broadcast channel. In an illustrative embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above method.

In an illustrative embodiment, there is also provided a non-transitory computer readable storage medium including instructions, such as included in the memory 1104, executable by the processor 1120 in the device 1100, for completing the above method. For example, the non-transitory computer-readable storage medium may be a ROM, a random access memory (RAM), a compact disc read only memory (CD-ROM), a magnetic tape, a floppy disc, an optical data storage device, and the like.

Based on the same concept as the above method embodiments, embodiments of the present invention also provide a communication apparatus, which may have the functions of the network device 101 in the above method embodiments, and may be used to perform the steps provided by the above embodiments to be performed by the network device 101. The functions may be implemented by hardware, or may be implemented by software or hardware executing corresponding software. The hardware or software includes one or more modules corresponding to the above functions.

In a possible implementation, a communication apparatus 1000 shown in FIG. 12 may serve as the network device 101 involved in the above method embodiments, and perform the steps performed by the network device 101 in the above method embodiments.

When a communication device is the network device, its structure may also be as shown in FIG. 12. Taking the network device 101 as a base station as an example to illustrate a structure of the communication device. As shown in FIG. 12, the device 1200 includes a memory 1201, a processor 1202, a transceiving component 1203, and a power component 1206. The memory 1201 is coupled with the processor 1202 and may be used to store programs and data necessary for the communication device 1200 to implement various functions. The processor 1202 is configured to support the communication device 1200 to perform corresponding functions in the above methods, and the functions may be implemented by invoking programs stored in the memory 1201. The transceiving component 1203 may be a wireless transceiver, which may be used to support the communication device 1200 to receive signaling and/or data and to send the signaling and/or the data through a wireless air interface. The transceiving component 1203 may also be called a transceiving unit or a communication unit. The transceiving component 1203 may include a radio frequency component 1204 and one or more antennas 1205. The radio frequency component 1204 may be a remote radio unit (RRU), and may be specifically used for a transmission of radio frequency signals and a conversion of the radio frequency signals and baseband signals. The one or more antennas 1205 may be specifically used for transmitting and receiving the radio frequency signals.

When the communication device 1200 needs to send the data, the processor 1202 may perform a baseband processing on data to be sent, and then output the baseband signals to a radio frequency unit. The radio frequency unit performs a radio frequency processing on the baseband signals and then sends the radio frequency signals in a form of electromagnetic waves through the antenna. When the data is sent to the communication device 1200, the radio frequency unit receives the radio frequency signals through the antenna, converts the radio frequency signals into baseband signals, and outputs the baseband signals to the processor 1202. The processor 1202 converts the baseband signals into data and processes the data.

Other implementations of embodiments of the present invention will be apparent to those skilled in the art from consideration of the specification and practice of the present invention disclosed here. The present invention is intended to cover any variations, uses, or adaptations of embodiments of the present invention following the general principles thereof and including such departures from embodiments of the present invention as come within known or customary practice in the art. It is intended that the specification and examples be considered as exemplary only, with a true scope and spirit of embodiments of the present invention being indicated by the following claims.

It will be appreciated that embodiments of the present invention is not limited to the exact construction that has been described above and illustrated in the accompanying drawings, and that various modifications and changes can be made without departing from the scope thereof. It is intended that the scope of embodiments of the present invention only be limited by the appended claims.

Industrial applicability

The network device or the UE determines the system frame number (SFN) of the first paging frame of the one or more paging frames corresponding to the PEI according to the one or more paging occasions (POs) corresponding to the paging early indication (PEI), so as to accurately determine the position of the first paging frame in the one or more paging frames corresponding to the PEI, thus allowing the UE to accurately receive the paging message and improving the communication efficiency.

**Claims**

1. A method for determining a first paging frame corresponding to a paging early indication (PEI), performed by a user equipment or a network device, comprising:
determining the first paging frame corresponding to the PEI according to one or more paging occasions (POs) corresponding to the PEI and a number of POs in one paging frame.

2. The method according to claim 1, wherein determining the first paging frame corresponding to the PEI according to one or more POs corresponding to the PEI and the number of POs in the one paging frame comprises:
determining the first paging frame corresponding to the PEI according to a number of POs corresponding to the PEI and the number of POs in the one paging frame.

3. The method according to claim 2, wherein determining the first paging frame corresponding to the PEI according to the number of POs corresponding to the PEI and the number of POs in the one paging frame comprises:
in response to the number of POs corresponding to the PEI being not greater than the number of POs in the one paging frame, determining a paging frame where a paging occasion (PO) monitored by the user equipment is located to be the first paging frame corresponding to the PEI.

4. The method according to claim 2, wherein determining the first paging frame corresponding to the PEI according to the number of POs corresponding to the PEI and the number of POs in the one paging frame comprises:
in response to the number of POs corresponding to the PEI being greater than the number of POs in the one paging frame, calculating a second value according to a following formula, and determining the first paging frame corresponding to the PEI according to the second value,

$$\text{the second value} = \left\lfloor \frac{i_{PO}}{N_S} \right\rfloor \times \frac{T}{N},$$

where $\lfloor \ \rfloor$ represents rounding down, $i_{PO}$ represents a relative PO index of a PO monitored by the user equipment with respect to one or more POs corresponding to the PEI, $N_S$ represents the number of POs in the one paging frame, $T$ represents a paging cycle of the user equipment, and $N$ represents a number of paging frames in one paging cycle of the user equipment.

5. The method according to claim 1, wherein determining the first paging frame corresponding to the PEI according to the one or more POs corresponding to the PEI and the number of POs in the one paging frame comprises:

in response to $i_{PO}$ being less than the number of POs in the one paging frame, determining the first paging frame corresponding to the PEI to be: a paging frame where a PO monitored by the user equipment is located, where $i_{PO}$ represents a relative PO index of the PO monitored by the user equipment with respect to one or more POs corresponding to the PEI, and $N_S$ represents the number of POs in the one paging frame.

6. The method according to claim 1, wherein determining the first paging frame corresponding to the PEI according to one or more POs corresponding to the PEI and the number of POs in the paging frame comprises:

in response to $i_{PO}$ being not less than the number of POs in the one paging frame, calculating, by the network device, a second value according to a following formula, and determining the first paging frame corresponding to the PEI according to the second value,

$$\text{the second value} = \left\lfloor \frac{i_{PO}}{N_S} \right\rfloor \times \frac{T}{N},$$

where $\lfloor \ \rfloor$ represents rounding down, $i_{PO}$ represents a relative PO index of a PO monitored by the user equipment with respect to one or more POs corresponding to the PEI, $N_S$ represents the number of POs in the one paging frame, $T$ represents a paging cycle of the user equipment, and $N$ represents a number of paging frames in one paging cycle of the user equipment.

7. The method according to claim 1, wherein determining the first paging frame corresponding to the PEI according to one or more POs corresponding to the PEI and the number of POs in the paging frame comprises:

determining a difference between a system frame number of a paging frame where a PO monitored by the user equipment is located and a second value to be a system frame number of the first paging frame corresponding to the PEI;

wherein the second value is $\left\lfloor \frac{i_{PO}}{N_S} \right\rfloor \times \frac{T}{N}$,
where $\lfloor \ \rfloor$ represents rounding down, $i_{PO}$ represents a relative PO index of a PO monitored by the user equipment with respect to one or more POs corresponding to the PEI, $N_S$ represents the number of POs in the one paging frame, $T$ represents a paging cycle of the user equipment, and $N$ represents a number of paging frames in one paging cycle of the user equipment.

8. The method according to claim 4 or 6, wherein
determining the first paging frame corresponding to the PEI according to the second value comprises:

determining a system frame number of the first paging frame corresponding to the PEI to be a difference between a system frame number of a paging frame where a PO monitored by the user equipment is located and the second value.

9. The method according to any one of claims 4 to 7, wherein $i_{PO}$ is determined by following formulas:

$$i_{PO} = ((UE\_ID \bmod N) \times N_s + i\_s) \bmod POnumPerPEI$$

$$i\_s = floor(UE\_ID / N) \bmod N_s$$

where *UE_ID* represents a user identifier, POnumPerPEI represents the number of POs corresponding to the PEI, *floor* represents rounding down, and mod represents a modulo operation.

10. A communication apparatus, comprising:
a processing module configured to determine a first paging frame corresponding to a paging early indication (PEI) according to a paging occasions (PO) corresponding to the PEI and a number of POs in one paging frame.

11. A communication device, comprising:

a processor; and
a memory configured to store computer programs;
wherein the processor is configured to execute the computer programs to implement the method according to any one of claims 1 to 9.

12. A computer-readable storage medium, having stored therein instructions that, when invoked by a computer, cause the computer to execute the method according to any one of claims 1 to 9.

wireless communication system 100

101

downlink

102

uplink

FIG. 1

user equipment 102

network device 101

S21-2, determining a first paging frame corresponding to a PEI according to a PO(s) corresponding to the PEI and a number of POs in one paging frame

S21-1, determining a first paging frame corresponding to a PEI according to a PO(s) corresponding to the PEI and a number of POs in one paging frame

FIG. 2

determining the first paging frame corresponding to the PEI according to a number of POs corresponding to the PEI and a number of POs in one paging frame

S301

FIG. 3

in response to the number of one or more paging occasions corresponding to the PEI being not greater than the number (Ns) of POs in the one paging frame, determining a paging frame where a PO monitored by the UE is located to be the first paging frame corresponding to the PEI

S401

FIG. 4

PF

8    16    24    32    40    48    56    64    72    80    88    96    104    112    120    128

Paging Cycle

FIG. 5

in response to the number of POs corresponding to the PEI being greater than the number (Ns) of POs included in the one paging frame, calculating a second value, and determining the first paging frame corresponding to the PEI according to the second value

S601

FIG. 6

in response to ipo being less than the number (Ns) of POs in the one paging frame, determining the first paging frame in one or more paging frames corresponding to the PEI to be: a paging frame where a paging occasion monitored by the UE is located

S701

FIG. 7

in response to ipo being not less than the number of POs in the one paging frame, calculating a second value, and determining the first paging frame corresponding to the PEI according to the second value

S801

FIG. 8

determining a difference between a system frame number of a paging frame where a paging occasion monitored by the UE is located and a second value to be a system frame number of the first paging frame corresponding to the PEI

S901

FIG. 9

1000

transceiving module ← processing module

1001                    1002

FIG. 10

EP 4 447 575 A1

FIG. 11

1200

FIG. 12

23

# EP 4 447 575 A1

| | INTERNATIONAL SEARCH REPORT | International application No. |
|---|---|---|
| | | **PCT/CN2021/137209** |

**A. CLASSIFICATION OF SUBJECT MATTER**

H04W 68/00(2009.01)i

According to International Patent Classification (IPC) or to both national classification and IPC

**B. FIELDS SEARCHED**

Minimum documentation searched (classification system followed by classification symbols)

H04W,H04L

Documentation searched other than minimum documentation to the extent that such documents are included in the fields searched

Electronic data base consulted during the international search (name of data base and, where practicable, search terms used)

CNTXT; 3GPP; ENTXT; VEN: 首寻呼帧, 第一寻呼帧, 寻呼帧, PF, 寻呼时机, PO, 寻呼预告指示, PEI, 数量, 索引, 确定, 计算, 获取, first paging frame, first pf, paging occasion, index, number, determin+, calculat+, obtain+

**C. DOCUMENTS CONSIDERED TO BE RELEVANT**

| Category* | Citation of document, with indication, where appropriate, of the relevant passages | Relevant to claim No. |
|---|---|---|
| X | ""RP-213348_Status Report for WI_UE Power Saving Enhancements for NR"" *3GPP tsg_ran\tsg_ran*, 30 November 2021 (2021-11-30), pp. 1-5 | 1-3, 5, 9-12 |
| A | ""R1-2110695_Collection of RAN1-related Agreements for UE Power Saving Enhancements for NR"" *3GPP tsg_ran\wg1_rl1*, 27 October 2021 (2021-10-27), entire document | 1-12 |
| A | CN 113316236 A (QUECTEL WIRELESS SOLUTIONS CO., LTD.) 27 August 2021 (2021-08-27) entire document | 1-12 |
| A | US 2020413367 A1 (VIVO MOBILE COMMUNICATION CO., LTD.) 31 December 2020 (2020-12-31) entire document | 1-12 |
| A | US 2018279256 A1 (NOKIA SOLUTIONS & NETWORKS OY) 27 September 2018 (2018-09-27) entire document | 1-12 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 August 2022** | **02 September 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/137209**

| Patent document cited in search report | | | Publication date (day/month/year) | Patent family member(s) | | | Publication date (day/month/year) |
|---|---|---|---|---|---|---|---|
| CN | 113316236 | A | 27 August 2021 | None | | | |
| US | 2020413367 | A1 | 31 December 2020 | EP | 3742819 | A1 | 25 November 2020 |
| | | | | JP | 2021513802 | A | 27 May 2021 |
| | | | | KR | 20200118198 | A | 14 October 2020 |
| | | | | CN | 110149682 | A | 20 August 2019 |
| | | | | WO | 2019158017 | A1 | 22 August 2019 |
| US | 2018279256 | A1 | 27 September 2018 | WO | 2017049625 | A1 | 30 March 2017 |
| | | | | EP | 3354088 | A1 | 01 August 2018 |

Form PCT/ISA/210 (patent family annex) (January 2015)